# EUROPÄISCHE PATENTSCHRIFT

(11) **EP 0 838 797 B1**
(45) Veröffentlichungstag und Bekanntmachung des Hinweises auf die Patenterteilung: **04.09.2002**
(21) Anmeldenummer: 97203247.8
(22) Anmeldetag: 17.10.1997
(51) Int. Cl.: G08G 1/0968, G01C 21/20

(54) **Navigationssystem für ein Landfahrzeug**
Road vehicle navigation system
Système de navigation pour véhicule routier

(30) Priorität: 26.10.1996 DE 19644689
(43) Veröffentlichungstag der Anmeldung: 29.04.1998
(73) Patentinhaber: Siemens Aktiengesellschaft, 80333 München (DE)
(72) Erfinder: Van Roekel, Jauke, Röntgenstrasse 24, 22335 Hamburg (DE)

(56) Entgegenhaltungen:
- EP-A- 0 564 353
- EP-A- 0 703 433
- EP-A- 0 703 436
- EP-A- 0 736 853
- PATENT ABSTRACTS OF JAPAN vol. 095, no. 006, 31.Juli 1995 & JP 07 083685 A (TOYOTA MOTOR CORP), 28.März 1995,
- PATENT ABSTRACTS OF JAPAN vol. 015, no. 360 (P-1250), 11.September 1991 & JP 03 138515 A (MITSUBISHI ELECTRIC CORP), 12.Juni 1991,

## Beschreibung

Die Erfindung betrifft ein Navigationssystem für ein Landfahrzeug mit einer Rechenschaltung
- zur Auswertung von empfangenen Verkehrsinformationen und
- zur Berechnung einer ersten statischen Route ohne Berücksichtigung der Verkehrsinformationen und einer zweiten dynamischen Route mit Berücksichtigung der Verkehrsinformation,
- zur Positionsbestimmung des Landfahrzeuges mittels wenigstens eines Sensorsignals und
mit einer Ausgabevorrichtung zur Ausgabe von von der Rechenschaltung gelieferten Routeninformationen.

Ein derartiges Navigationssystem ist aus der DE 4008460 A1 bekannt. Dieses bekannte Navigationssystem berechnet zunächst eine erste statische Route ohne Berücksichtigung der Verkehrsinformationen, wertet die empfangenen Verkehrsinformationen kontinuierlich aus und berechnet mit Berücksichtigung der Verkehrsinformationen eine zweite dynamische Route. Ist die zweite Route voraussichtlich schneller als die erste Route, so wird von der Rechenschaltung die zweite Route als Routeninformation an die Ausgabevorrichtung geliefert und der Fahrer des Landfahrzeuges wird auf der zweiten Route zum Ziel geführt.

Aus Patent Abstracts of Japan, Publication Number 07083685 ist ein Navigationssystem bekannt, bei dem darüber hinaus die zweite Route als Alternativroute zu der ersten Route ausgegeben wird und die Auswahl zwischen der ersten und der zweiten Route dem Fahrer überlassen wird.

Es ist Aufgabe der vorliegenden Erfindung, ein Navigationssystem der eingangs genannten Art zu schaffen, welches benutzerfreundlicher ist.

Diese Aufgabe wird erfindungsgemäß durch ein Navigationssystem mit den Merkmalen des Anspruchs 1 gelöst.

Betreffen die empfangenen Verkehrsinformationen die erste Route, so wird von der Rechenschaltung unter Berücksichtung dieser Verkehrsinformationen die zweite Route berechnet. Erscheint diese zweite Route günstiger als die erste Route, so wird von der Rechenschaltung eine Auswahlinformation an die Ausgabevorrichtung geliefert. Diese Auswahlinformation bietet dem Benutzer des Navigationssystems die zweite Route als Alternativroute zu der ersten Route an. Die Auswahlinformation kann beispielsweise folgenden Inhalt haben:
"Fahranweisung 1 oder Fahranweisung 2, um einen Stau zu umgehen".

Unter Fahranweisungen werden dabei die üblichen Fahranweisungen von Navigationssystemen verstanden, z.B. "Rechts Abbiegen", "Geradeaus Weiterfahren" u.s.w.

Ein derartiges System hat den Vorteil, dass der Benutzer selbst entscheiden kann, ob er auf der ersten oder der zweiten Route zum Ziel geführt werden möchte. Die Auswahl der ersten oder der zweiten Route kann beispielsweise manuell durch Drücken eines Auswahlknopfes erfolgen.

Die Auswahlinformationen werden dem Fahrer in der Regel während der Fahrt übermittelt und der Fahrer muss sich daher während der Fahrt entscheiden, ob er nachfolgend auf der ersten Route ohne Berücksichtigung der Verkehrsinformationen oder auf der zweiten Route mit Berücksichtung der Verkehrsinformationen ans Ziel geführt werden möchte.

Gemäß der Erfindung ist die Rechenschaltung zur Lieferung von Routeninformationen über die Route vorgesehen, die nach der Ausgabe der zweiten Route als Alternativroute eingeschlagen worden ist.

Hierbei ist es nicht erforderlich, dass der Fahrer des Fahrzeugs für die Auswahl der ersten oder der zweiten Route das Navigationssystem aktiv betätigen muss, d.h., dass der Fahrer keine Bedienelemente wie z.B. Knöpfe oder Tasten bedienen muss und den Blick nicht von der Fahrbahn abwenden muss. Somit wird bei der Auswahl der ersten oder der zweiten Route die Aufmerksamkeit des Fahrers auf das Verkehrsgeschehen nicht beeinträchtigt. Dadurch wird die Verkehrssicherheit erhöht.

Der Fahrer kann dem Navigationssystem durch die nach der Ausgabe der Auswahlinformation eingeschlagene bzw. gefahrene Route mitteilen, ob er auf der ersten Route oder auf der zweiten Route geführt werden möchte. Fährt der Fahrer nach der Ausgabe der Auswahlinformation auf der ersten Route weiter, so liefert die Rechenschaltung nachfolgend die Routeninformationen über die erste Route an die Ausgabevorrichtung und der Fahrer wird auf der ersten Route zum Ziel geführt, wobei nachfolgend empfangene Verkehrsinformationen ignoriert werden. Wechselt der Fahrer nach der Ausgabe der Auswahlinformation auf die zweite Route, so liefert die Rechenschaltung nachfolgend die Routeninformationen über die zweite Route an die Ausgabevorrichtung und der Fahrer wird auf der zweiten Route zum Ziel geführt. Nachfolgend empfangene Verkehrsinformationen werden von der Rechenschaltung fortlaufend berücksichtig und die zweite Route wird fortlaufend den aktuellen Verkehrsinformationen angepasst.

Die Erfindung ist weiterhin dadurch gekennzeichnet, dass die Rechenschaltung zur Lieferung einer, eine zweite Route als Alternativroute zu der ersten Route anbietenden Auswahlinformation an die Ausgabevorrichtung vorgesehen ist, falls die voraussichtliche Fahrzeit auf der zweiten Route kürzer als die voraussichtliche Fahrzeit auf der ersten Route ist.

Die voraussichtlich kürzere Fahrzeit ist ein vorteilhaftes Kriterium für das Anbieten der zweiten Route. Es ist jedoch auch denkbar, daß die Bedingungen, unter denen die Auswahlinformation an die Ausgabevorrichtung geliefert wird, vom Benutzer des Navigationssystems festlegbar sind. Der Benutzer des Navigationssystems kann damit beispielsweise definieren, daß er erst dann über das Vorliegen der zweiten Route informiert werden möchte, falls die voraussichtliche Fahrzeit auf der zweiten Route um eine definierbare Zeitspanne, beispielsweise 15 Minuten, kürzer als die voraussichtliche Fahrzeit auf der ersten Route ist.

Eine weitere vorteilhafte Ausgestaltung der Erfindung ist dadurch gekennzeichnet, daß die Verkehrsinformationen RDS (Radio-Data-System)-Informationen und/oder RDS/TMC(Radio-Data-System/Traffic-Message-Channel)-Informationen sind.

RDS-Informationen werden mittlerweile von den meisten Rundfunksendern übertragen und die Übertragung von Verkehrsinformationen mittels RDS/TMC wird derzeit intensiv erprobt. Mit der weiteren Verbreitung von RDS/TMC und den dazugehörigen Empfängern können derartig übertragene Verkehrsinformationen besonders einfach und kostengünstig in Navigationssystemen ausgewertet werden.

Eine weitere vorteilhafte Ausgestaltung der Erfindung ist dadurch gekennzeichnet, daß die Verkehrsinformationen mittels des GSM-Netzes übertragene Informationen sind.

Da die Infrastruktur für das GSM-Netz schon sehr weit ausgebaut ist, läßt sich dieses Netz gut für die Übertragung von Verkehrsinformationen nutzen. Dieses wird derzeit in dem Forschungsprogramm SOCRATES untersucht.

Eine weitere vorteilhafte Ausgestaltung der Erfindung ist dadurch gekennzeichnet, daß die Ausgabevorrichtung zur optischen und/oder akustischen Ausgabe der Routeninformationen und der Auswahlinformationen vorgesehen ist.

Die akustische Ausgabe der Routeninformationen und der Auswahlinformationen hat den Vorteil, daß der Fahrer des Fahrzeugs seinen Blick nicht von der Fahrbahn abwenden muß, um die Routeninformationen und Auswahlinformationen aufzunehmen. Dadurch wird die Verkehrssicherheit erhöht. Die optische Ausgabe der Routeninformationen und Auswahlinformationen hat den Vorteil, daß die aktuelle Fahrsituation z.B. mittels abstrahierter Kartenausschnitte besonders gut verdeutlicht werden kann.

Eine weitere vorteilhafte Ausgestaltung der Erfindung ist dadurch gekennzeichnet, daß die Rechenschaltung zur Lieferung von Zusatzinformationen an die Ausgabevorrichtung vorgesehen ist, z.B. über die voraussichtliche Differenzfahrzeit zwischen der ersten und der zweiten Route, über die Differenzlänge zwischen der ersten und der zweiten Route und/oder über die Länge und die Position eines Staus auf der ersten Route.

Die Zusatzinformationen können dem Fahrer des Fahrzeugs mittels der Ausgabevorrichtung optisch und/oder akustisch übermittelt werden. Sie erleichtern dem Fahrer die Entscheidung, ob er auf der ersten Route oder auf der zweiten Route zum Ziel geführt werden möchte.

Bei einer weiteren vorteilhaften Ausgestaltung der Erfindung ist vorgesehen, daß die Rechenschaltung bei Auftreten einer Verkehrsstörung bzw. Verkehrsbehinderung auf der ersten Route als Zusatzinformation die jeweils aktuelle Entfernung des Fahrzeugs zu dem Ort der Verkehrsstörung bzw. Verkehrsbehinderung an die Ausgabevorrichtung liefert.

Die aktuelle Entfernung zu der Verkehrsstörung bzw. Verkehrsbehinderung ist ein wesentliches und einfaches Kriterium für die Entscheidung des Fahrers, ob er auf der ersten oder der zweiten Route zum Ziel geführt werden möchte. Die aktuelle Entfernung zu der Verkehrsstörung gibt auch dem ortsunkundigen Fahrer eine Entscheidungshilfe, der mit der Angabe der Position der Verkehrsstörung bzw. Verkehrsbehinderung vielfach nichts anfangen kann.

Ein erfindungsgemäßes Navigationssystem kann vorzugsweise in einem Kraftfahrzeug eingesetzt werden.

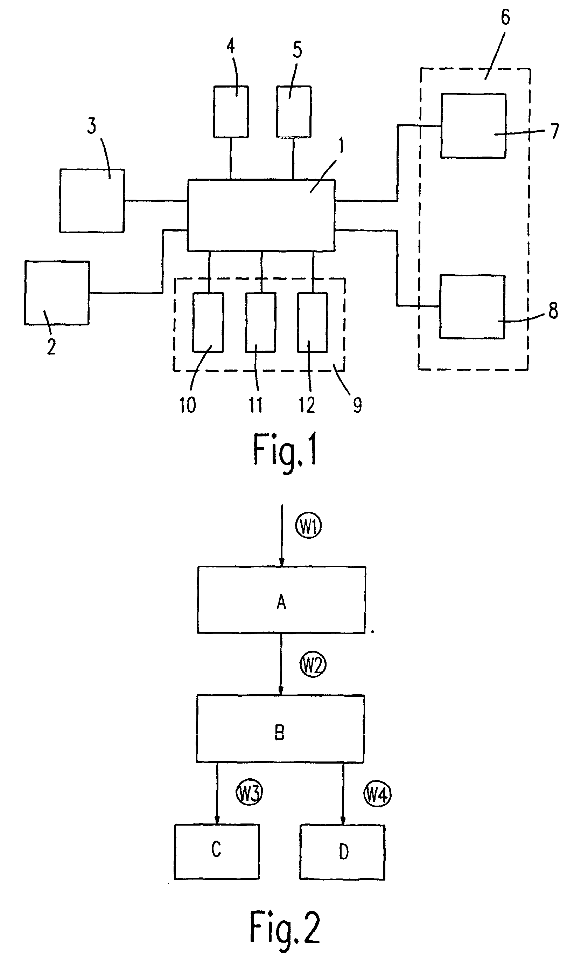

Ein Ausführungsbeispiel der Erfindung wird nachfolgend anhand der Zeichnung in den Figuren 1 und 2 näher erläutert. Es zeigen:
- Fig. 1: Ein Blockschaltbild eines Navigationssystems für ein Landfahrzeug mit einer Rechenschaltung und mit einer Ausgabevorrichtung zur Ausgabe von von der Rechenschaltung gelieferten Auswahlinformationen und Routeninformationen,
- Fig. 2: Eine schematische Darstellung eines Zustandsdiagramms des in der Rechenschaltung 1 implementierten Softwarealgorithmus.

Fig. 1 zeigt ein Blockschaltbild eines Ausführungsbeispiels eines erfindungsgemäßen Navigationssystems. Das Navigationssystem weist als zentrales Element eine Rechenschaltung 1 auf, welche mit einer Bedienvorrichtung 2, einer Kartenspeichereinheit 3, einem RDS/TMC-Empfänger 4 sowie einem GSM-Modul 5 gekoppelt ist. Die Bedienvorrichtung 2 kann beispielsweise mittels einer Tastatur, eines Trackballs oder eines berührungssensitiven Bildschirms (Touch Screen) realisiert werden. Die Kartenspeichereinheit 3 kann beispielsweise mittels eines CD-Rom-Laufwerkes realisiert werden, wobei die Karteninformationen auf einer oder mehreren CD-Roms abgespeichert sind. Der RDS/TMC-Empfänger 4 dient dem Empfang von Verkehrsinformationen, die als RDS/TMC-Informationen von vielen Rundfunkanstalten gesendet werden. Mittels des GSM-Moduls 5 können sowohl Verkehrsinformationen, die nach dem GSM-Standard übertragen werden, als auch Telefongespräche durchgeführt werden. Die Übertragung von Verkehrsinformationen mittels des GSM-Systems wird derzeit in dem Forschungsprogramm SOCRATES untersucht.

Es ist eine Ausgabevorrichtung 6 vorgesehen, die ein optisches Ausgabemodul 7 und ein akustisches Ausgabemodul 8 umfaßt. Sowohl das optische Ausgabemodul 7 als auch das akustische Ausgabemodul 8 sind mit der Rechenschaltung 1 gekoppelt. Es ist eine Sensoreinheit 9 vorgesehen, die Radsensoren 10, einen elektronischen Kompaß 11 sowie eine GPS-Empfangseinheit 12 aufweist. Die Radsensoren 10, der Kompaß 11 und die GPS-Empfangseinheit 12 sind jeweils mit der Rechenschaltung 1 gekoppelt. Die Radsensoren 10 liefern Informationen von dem linken und dem rechten Rad des Fahrzeuges, entweder von den Vorderrädern oder von den Hinterrädern. Die Information der Radsensoren, die diese an die Rechenschaltung 1 übertragen, betrifft sowohl die vom Fahrzeug gefahrene Entfernung als auch Richtungsänderungen in Folge von unterschiedlich zurückgelegten Wegen des linken und des rechten Rades. Der elektronische Kompaß 11 liefert Richtungsinformationen an die Rechenschaltung 1. Die GPS-Empfangseinheit 12 (GPS = Global Positioning System) liefert Positionsinformationen über die gegenwärtige Position des Fahrzeuges an die Rechenschaltung 1. Diese Positionsinformationen haben eine Genauigkeit in der Größenordnung von ca. 100 Metern. Aus den Informationen der Kartenspeichereinheit 3, der Radsensoren 10, des Kompasses 11 und der GPS-Empfangseinheit 12 berechnet die Rechenschaltung 1 die aktuelle Position des Fahrzeuges. Es ist möglich, auf die GPS-Empfangseinheit 12 zu verzichten und das Navigationssystem nur mit der Kartenspeichereinheit 3, den Radsensoren 10 und dem Kompaß 11 zu betreiben.

Nachfolgend wird die Funktionsweise des erfindungsgemäßen Navigationssystems erläutert.

Zu Beginn der Fahrt übermittelt der Fahrer des Fahrzeuges der Rechenschaltung 1 mittels der Bedienvorrichtung 2 den Startpunkt und den gewünschten Zielpunkt. Die Rechenschaltung 1 berechnet mittels der Informationen der Kartenspeichereinheit 3 zunächst eine erste Route zwischen dem Startpunkt und dem Zielpunkt. Bei dieser ersten Route werden Verkehrsinformationen, die mittels des RDS/TMC-Empfängers 4 oder mittels des GSM-Moduls 5 empfangen werden, nicht berücksichtigt. Die Rechenschaltung 1 liefert zunächst die Routeninformationen über die erste Route an die Ausgabevorrichtung 6 weiter und der Fahrer des Fahrzeuges wird zunächst auf der ersten Route zum Ziel geführt.

Während der Fahrt wertet die Rechenschaltung 1 die mittels des RDS/TMC-Empfängers 4 oder des GSM-Moduls 5 empfangenen Verkehrsinformationen aus und berechnet, sofern die Verkehrsinformationen die erste Route betreffen, eine zweite Route, in der die Verkehrsinformationen berücksichtigt werden. Diese zweite Route wird von der Rechenschaltung bezüglich der voraussichtlichen Fahrzeit mit der ersten Route verglichen. Ist die voraussichtliche Fahrzeit auf der zweiten Route kürzer als die voraussichtliche Fahrzeit auf der ersten Route, so liefert die Rechenschaltung 1 eine Auswahlinformation an die Ausgabevorrichtung 6, in der die zweite Route als Alternativroute zu der ersten Route angeboten wird. Diese Auswahlinformation wird vorzugsweise mittels des akustischen Ausgabemoduls 8 wiedergegeben, da der Fahrer die mittels des akustischen Ausgabemoduls 8 wiedergegebene Auswahlinformation hören kann, ohne seinen Blick von der Fahrbahn abzuwenden. Eine derartige Auswahlinformation könnte z.B. folgendermaßen lauten:

"Auf der geplanten Route ist ein Stau aufgetreten. Um den Stau zu umfahren, biegen Sie bitte an der nächsten Kreuzung links ab. Um auf der geplanten Route zu verbleiben, fahren Sie an der nächsten Kreuzung bitte geradeaus."

Neben der Auswahlinformation werden von der Rechenschaltung 1 Zusatzinformationen an die Ausgabevorrichtung 6 geliefert. Als Zusatzinformationen sind z.B. die voraussichtliche Differenzfahrzeit zwischen der ersten und der zweiten Route, die Differenzlänge zwischen der ersten und der zweiten Route und/oder die Länge und die Position eines Staus auf der ersten Route denkbar. Diese Zusatzinformationen können sowohl akustisch mittels des akustischen Ausgabemoduls 8 als auch visuell mittels des optischen Ausgabemoduls 7 an den Fahrer des Fahrzeuges übermittelt werden.

Der Fahrer muß sich nun entscheiden, ob er auf der geplanten ersten Route verbleiben möchte oder ob er von dem Navigationssystem auf der zweiten Route geführt werden möchte. Diese Entscheidung kann der Fahrer dem Navigationssystem durch "Fahren" der ersten oder der zweiten Route mitteilen.

Für das obige Beispiel bedeutet dies folgendes:

Biegt der Fahrer nach der Ausgabe der Auswahlinformation nach links ab, so wird dies von der Rechenschaltung 1 als die Entscheidung des Fahrers gewertet, daß dieser auf die zweite Route wechseln möchte und die Verkehrsinformationen nachfolgend bei der Routenplanung berücksichtigt werden sollen. Die Rechenschaltung 1 liefert nachfolgend die Routeninformationen über die zweite Route an die Ausgabevorrichtung 6 und der Fahrer wird auf der zweiten Route zum Ziel geführt. Die zweite Route wird dabei ständig den aktuellen Verkehrsinformationen, die mittels des RDS/TMC-Empfängers 4 und/oder des GSM-Moduls 5 an die Rechenschaltung 1 übermittelt werden, angepaßt.

Fährt der Fahrer im obigen Beispiel nach der Ausgabe der Auswahlinformation an der nachfolgenden Kreuzung geradeaus weiter, so wird dies von der Rechenschaltung 1 als die Entscheidung des Fahrers gewertet, daß dieser auf der ersten Route verbleiben möchte und die Verkehrsinformationen nicht berücksichtigt werden sollen. Daher liefert die Rechenschaltung nachfolgend die Routeninformationen über die erste Route an die Ausgabevorrichtung 6 und der Fahrer wird auf der ersten Route zum Ziel geführt, wobei nachfolgend mittels des RDS/TMC-Empfängers 4 und/oder des GSM-Moduls 5 empfangene Verkehrsinformationen ignoriert werden.

Die Information, ob der Fahrer nach der Ausgabe der Auswahlinformation auf der ersten Route verblieben ist oder auf die zweite Route übergewechselt ist, berechnet die Rechenschaltung 1 aus den Informationen der Kartenspeichereinheit 3, der Radsensoren 10, des Kompasses 11 und der GPS-Empfangseinheit 12.

Der Fahrer kann somit das Navigationssystem durch "Fahren" bedienen und wird nicht gezwungen, seinen Blick von der Fahrbahn abzuwenden und die Bedienvorrichtung 2 zu betätigen. Dadurch wird die Konzentration auf das Verkehrsgeschehen nicht beeinträchtigt.

Fig. 2 zeigt eine schematische Darstellung eines Zustandsdiagramms des in der Rechenschaltung 1 implementierten Softwarealgorithmus.

Der Softwarealgorithmus weist einen ersten Zustand A, einen zweiten Zustand B, einen dritten Zustand C und einen vierten Zustand D auf. Es sind ein erstes Zustandswechselereignis W1, ein zweites Zustandswechselereignis W2, ein drittes Zustandswechselereignis W3 und ein viertes Zustandswechselereignis W4 vorgesehen, die jeweils einen Wechsel zwischen den einzelnen Zuständen auslösen. Das erste Zustandswechselereignis W1 bewirkt unabhängig von dem vorherigen Zustand einen Wechsel in den ersten Zustand A.
Das zweite Zustandswechselereignis W2 bewirkt einen Wechsel von dem ersten Zustand A in den zweiten Zustand B.
Das dritte Zustandswechselereignis W3 bewirkt einen Wechsel von dem zweiten Zustand B in den dritten Zustand C.
Das vierte Zustandswechselereignis W4 bewirkt einen Wechsel von dem zweiten Zustand B in den vierten Zustand D.

Das erste Zustandswechselereignis W1 ist das Ereignis, daß das Navigationssystem eingeschaltet wird oder daß während des Betriebs des Navigationssystems von dem Benutzer ein Neustart (RESET) vorgenommen wird. Nach dem RESET bzw. nach dem Einschalten des Geräts wird der Benutzer mittels der Ausgabevorrichtung 6 aufgefordert, mittels der Bedienvorrichtung 2 das gewünschte Ziel einzugeben. Das zweite Zustandswechselereignis W2 ist das Ereignis, daß die Rechenschaltung 1 als günstigere Alternativroute die zweite Route berechnet hat und diese zweite Route dem Benutzer als Alternativroute mittels der Ausgabevorrichtung 6 anbietet.

Das dritte Zustandswechselereignis W3 ist das Ereignis, daß der Fahrer nach der Ausgabe der Auswahlinformation auf die zweite Route wechselt. Das vierte Zustandswechselereignis W4 ist das Ereignis, daß der Fahrer nach der Ausgabe der Auswahlinformation auf der ersten Route weiterfährt.

In dem ersten Zustand A berechnet die Rechenschaltung 1 zunächst ohne Berücksichtigung der Verkehrsinformationen die erste Route zu dem von dem Benutzer eingegebenen Ziel. Bei dieser ersten Route werden Verkehrsinformationen, die mittels des RDS/TMC-Empfängers 4 oder mittels des GSM-Moduls 5 empfangen werden, nicht berücksichtigt. Die Rechenschaltung 1 liefert zunächst die Routeninformationen über die erste Route an die Ausgabevorrichtung 6 weiter und der Fahrer des Fahrzeuges wird zunächst auf der ersten Route ohne Berücksichtigung der Verkehrsinformationen zum Ziel geführt.

Während der Fahrt wertet die Rechenschaltung 1 die mittels des RDS/TMC-Empfängers 4 oder des GSM-Moduls 5 empfangenen Verkehrsinformationen aus und berechnet, sofern die Verkehrsinformationen die erste Route betreffen, eine zweite Route, in der die Verkehrsinformationen berücksichtigt werden. Diese zweite Route wird von der Rechenschaltung 1 bezüglich der voraussichtlichen Fahrzeit mit der ersten Route verglichen. Ist die voraussichtliche Fahrzeit auf der zweiten Route kürzer als die voraussichtliche Fahrzeit auf der ersten Route, so tritt das Zustandswechselereignis W2 auf und die Rechenschaltung 1 liefert eine Auswahlinformation an die Ausgabevorrichtung 6, in der die zweite Route als Alternativroute zu der ersten Route angeboten wird.

Das System geht nun in den Zustand B über, in dem es auf eine Entscheidung des Fahres wartet, ob er auf der ersten Route oder auf der zweiten Route zum Ziel geführt werden möchte.

Die Information, ob der Fahrer nach der Ausgabe der Auswahlinformation auf der ersten Route verblieben ist oder auf die zweite Route übergewechselt ist, berechnet die Rechenschaltung 1 aus den Informationen der Kartenspeichereinheit 3, der Radsensoren 10, des Kompasses 11 und der GPS-Empfangseinheit 12.

Tritt nach der Ausgabe der Auswahlinformation das Zustandswechselereignis 3 auf auf, d.h., ist der Fahrer nach der Ausgabe der Auswahlinformation auf die zweite Route übergewechselt, so geht das System in den Zustand C über, in dem die Rechenschaltung nachfolgend die Routeninformationen über die zweite Route an die Ausgabevorrichtung 6 liefert und der Fahrer auf der zweiten Route zum Ziel geführt wird. Die zweite Route wird dabei ständig den aktuellen Verkehrsinformationen, die mittels des RDS/TMC-Empfängers 4 und/oder des GSM-Moduls 5 an die Rechenschaltung 1 übermittelt werden, angepaßt.

Tritt nach der Ausgabe der Auswahlinformation das Zustandswechselereignis 4 auf auf, d.h., ist der Fahrer nach der Ausgabe der Auswahlinformation auf der ersten Route verblieben, so wechselt das System in den Zustand D über, die Rechenschaltung liefert nachfolgend die Routeninformationen über die erste Route an die Ausgabevorrichtung 6 und der Fahrer wird auf der ersten Route zum Ziel geführt, wobei nachfolgend mittels des RDS/TMC-Empfängers 4 und/oder des GSM-Moduls 5 empfangene Verkehrsinformationen für die Routenführung ignoriert werden.

## Patentansprüche

1. Navigationssystem für ein Landfahrzeug mit einer Rechenschaltung (1)
- zur Auswertung von empfangenen Verkehrsinformationen und
- zur Berechnung einer ersten statischen Route ohne Berücksichtigung der Verkehrsinformationen und einer zweiten dynamischen Route mit Berücksichtigung der Verkehrsinformationen,
- zur Positionsbestimmung des Landfahrzeuges mittels wenigstens eines Sensorsignals und
mit einer Ausgabevorrichtung (6) zur Ausgabe von von der Rechenschaltung (1) gelieferten Routeninformationen, wobei weiterhin die Rechenschaltung (1) zur Lieferung einer, eine zweite Route als Alternativroute zu der ersten Route anbietenden Auswahlinformation an die Ausgabevorrichtung (6) vorgesehen ist, falls die voraussichtliche Fahrzeit auf der zweiten Route kürzer als die voraussichtliche Fahrzeit auf der ersten Route ist und die Rechenschaltung (1) zur Lieferung von Routeninformationen über die Route vorgesehen ist, die nach der Ausgabe der Auswahlinformation eingeschlagen worden ist.

2. Navigationssystem nach Anspruch 1, **dadurch gekennzeichnet, dass** die Verkehrsinformation RDS(Radio-Data-System)-Informationen und/oder RDS/TMC (Radio-Data-System/Traffic-Message-Channel)-Informationen sind.

3. Navigationssystem nach Anspruch 1, **dadurch gekennzeichnet, dass** die Verkehrsinformationen über das GSM-Netz übertragene Informationen sind.

4. Navigationssystem nach einem der Ansprüche 1 bis 3, **dadurch gekennzeichnet, dass** die Ausgabevorrichtung (6) zur optischen und/oder akustischen Ausgabe der Routeninformationen und/oder Auswahlinformationen vorgesehen sind.

5. Navigationssystem nach einem der Ansprüche 1 bis 4, **dadurch gekennzeichnet, dass** die Rechenschaltung (1) zur Lieferung von Zusatzinformationen an die Ausgabevorrichtung (6) vorgesehen ist, z. B. über die voraussichtliche Differenzfahrzeit zwischen der ersten und zweiten Route, über die Differenzlänge zwischen der ersten und der zweiten Route und/oder über die Länge und die Position eines Staus auf der ersten Route.

6. Navigationssystem nach Anspruch 5, **dadurch gekennzeichnet, dass** die Rechenschaltung (1) dazu vorgesehen ist, bei Auftreten einer Verkehrsstörung bzw. Verkehrsbehinderung auf der ersten Route als Zusatzinformation die jeweils aktuelle Entfernung des Fahrzeugs zu dem Ort der Verkehrsstörung bzw. Verkehrsbehinderung an die Ausgabevorrichtung zu liefern.

7. Kraftfahrzeug mit einem Navigationssystem nach einem der Ansprüche 1 bis 6.

## Claims

1. Navigation system for a road vehicle having an arithmetic circuit (1)
- for evaluating received traffic information and
- for calculating a first static route without taking into account the traffic information and a second dynamic route taking into account the traffic information,
- for determining the position of the road vehicle by means of at least one sensor signal, and
having an output device (6) for outputting the route information which is supplied by the arithmetic circuit (1), the arithmetic circuit (1) also being provided for supplying the output device (6) with selection information which offers a second route as an alternative route to the first route if the anticipated driving time on the second route is shorter than the anticipated driving time on the first route, and the arithmetic circuit (1) being provided for supplying route information relating to the route which has been taken after the selection information has been output.

2. Navigation system according to Claim 1, **characterized in that** the traffic information is RDS (Radio Data System) information and/or RDS/TMS (Radio Data System/Traffic Message Channel) information.

3. Navigation system according to Claim 1, **characterized in that** the traffic information is information which is transmitted via the GSM network.

4. Navigation system according to one of Claims 1 to 3, **characterized in that** the output device (6) is provided for visually and/or audibly outputting the route information and/or selection information.

5. Navigation system according to one of Claims 1 to 4, **characterized in that** the arithmetic circuit (1) is provided for supplying additional information to the output device (6), for example relating to the anticipated difference in driving time between the first and second routes, relating to the difference in length between the first and second routes and/or relating to the length and the position of congestion on the first route.

6. Navigation system according to Claim 5, **characterized in that** the arithmetic circuit (1) is provided for the purpose that, when traffic disruption or a traffic obstruction occurs on the first route, it supplies, as additional information, the respective current distance of the vehicle from the location of the traffic disruption or traffic obstruction to the output device.

7. Motor vehicle having a navigation system according to one of Claims 1 to 6.

## Revendications

1. Système de navigation pour véhicule routier comprenant un circuit de calcul (1) servant
- à l'analyse d'informations de circulation reçues et
- au calcul d'un premier itinéraire statique sans tenir compte des informations de circulation et d'un second itinéraire dynamique en tenant compte des informations de circulation,
- à la détermination de position du véhicule routier au moyen d'au moins un signal de capteur et
le système comprenant également un dispositif de présentation (6) servant à présenter des informations d'itinéraire fournies par le circuit de calcul (1), tandis qu'en outre, le circuit de calcul (1) est prévu pour fournir au dispositif de présentation (6) une information de choix offrant un second itinéraire en tant qu'alternative d'itinéraire au premier itinéraire, dans le cas où le temps de parcours estimé sur le second itinéraire est plus court que le temps de parcours estimé sur le premier itinéraire et le circuit de calcul (1) est prévu pour fournir des informations d'itinéraire concernant l'itinéraire qui a été suivie en fonction de la présentation de l'information de choix.

2. Système de navigation suivant la revendication 1, **caractérisé en ce que** les informations de circulation sont des informations RDS (Radio-Data-System) et/ou des informations RDS/TMC (Radio-Data-System/Traffic-Message-Channel).

3. Système de navigation suivant la revendication 1, **caractérisé en ce que** les informations de circulation sont des informations transmises sur le réseau GSM.

4. Système de navigation suivant l'une des revendications 1 à 3, **caractérisé en ce que** le dispositif de présentation (6) est prévu pour la présentation optique et/ou acoustique des informations d'itinéraire et/ou des informations de choix.

5. Système de navigation suivant l'une des revendications 1 à 4, **caractérisé en ce que** le circuit de calcul (1) est prévu pour fournir au dispositif de présentation (6) des informations supplémentaires, par exemple concernant la différence de temps de parcours estimé entre le premier et le second itinéraires, concernant la différence de longueur entre le premier et le second itinéraires et/ou concernant la longueur et la position d'un bouchon sur le premier itinéraire.

6. Système de navigation suivant la revendication 5, **caractérisé en ce que** le circuit de calcul (1) est prévu pour fournir en tant qu'information supplémentaire au dispositif de présentation, lors de l'apparition d'une perturbation de circulation ou d'un obstacle à la circulation sur le premier itinéraire, la distance actuelle que présente chaque fois le véhicule vis-à-vis du lieu de la perturbation de circulation ou de l'obstacle à la circulation.

7. Véhicule automobile comportant un système de navigation suivant l'une des revendications 1 à 6.
